(19) Europäisches Patentamt
European Patent Office
Office européen des brevets

(11) **EP 4 167 189 A1**

(12) **EUROPEAN PATENT APPLICATION**

(43) Date of publication:
**19.04.2023 Bulletin 2023/16**

(21) Application number: **22216743.9**

(22) Date of filing: **27.12.2022**

(51) International Patent Classification (IPC):
*G06T 15/00* (2011.01)    *G06F 3/01* (2006.01)
*G06T 7/70* (2017.01)    *G06T 15/20* (2011.01)
*H04N 13/383* (2018.01)    *H04N 13/106* (2018.01)
*H04N 13/307* (2018.01)    *G06N 3/08* (2023.01)
*H04N 13/111* (2018.01)    *H04N 13/279* (2018.01)

(52) Cooperative Patent Classification (CPC):
**G06T 7/73; G06F 3/011; G06F 3/013; G06N 3/08;
G06T 15/005; G06T 15/20; G06T 15/205;
H04N 13/106; H04N 13/111; H04N 13/279;
G06T 2207/30201; H04N 13/302; H04N 13/383**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2021 CN 202111614532**

(71) Applicant: **Beijing Baidu Netcom
Science Technology Co., Ltd.
Beijing 100085 (CN)**

(72) Inventors:
• **Zhong, Pengfei**
  **Beijing, 100085 (CN)**

• **Li, Jiangyong**
  **Beijing, 100085 (CN)**
• **Liu, Yu**
  **Beijing, 100085 (CN)**
• **Ren, Xiaohua**
  **Beijing, 100085 (CN)**
• **Huang, Xiaolin**
  **Beijing, 100085 (CN)**
• **Zhao, Huibin**
  **Beijing, 100085 (CN)**
• **Dong, Yueqiang**
  **Beijing, 100085 (CN)**

(74) Representative: **Hoffmann Eitle
Patent- und Rechtsanwälte PartmbB
Arabellastraße 30
81925 München (DE)**

(54) **DISPLAY METHOD, DISPLAY APPARATUS, ELECTRONIC DEVICE AND STORAGE MEDIUM**

(57)    The present disclosure provides a display method, a display apparatus, an electronic device and a storage medium, which relate to a field of image processing technology, and in particular, to fields of naked eye 3D image display technology and computer vision technology. The specific implementation plan is: determining eye position information of an object in an image; determining camera position information of naked eye 3D according to the eye position information; creating an eye space according to the camera position information; obtaining, according to object position information of a target object in the eye space, projection position information of the target object on a projection plane based on projection information; and displaying the target object according to the projection position information.

FIG. 1

EP 4 167 189 A1

**Description**

TECHNICAL FIELD

The present disclosure relates to a field of image processing technology, and in particular, to fields of naked eye 3D image display technology and computer vision technology. Specifically, the present disclosure relates to a display method, a display apparatus, an electronic device, and a storage medium.

BACKGROUND

With the continuous development of computer technology, display technology is becoming more and more mature. The naked eye 3D image display technology has gradually penetrated into the daily life of a subject. The naked eye 3D image display technology may refer to a technology of viewing a 3D display image without wearing an auxiliary equipment.

SUMMARY

The present disclosure provides a display method, a display apparatus, an electronic device and a storage medium.

According to an aspect of the present disclosure, a display method is provided, including: determining eye position information of an object in an image; determining camera position information of naked eye 3D according to the eye position information; creating an eye space according to the camera position information; obtaining, according to object position information of a target object in the eye space, projection position information of the target object on a projection plane based on projection information; and displaying the target object according to the projection position information.

According to another aspect of the present disclosure, a display apparatus is provided, including: a first determination module configured to determine eye position information of an object in an image; a second determination module configured to determine camera position information of naked eye 3D according to the eye position information; a creation module configured to create an eye space according to the camera position information; an obtaining module configured to obtain, according to object position information of a target object in the eye space, projection position information of the target object on a projection plane based on projection information; and a display module configured to display the target object according to the projection position information.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method as described in the present disclosure.

According to another aspect of the present disclosure, a non-transitory computer-readable storage medium having computer instructions stored thereon is provided, wherein the computer instructions are configured to cause a computer to implement the method as described in the present disclosure.

According to another aspect of the present disclosure, a computer program product containing a computer program is provided, wherein the computer program, when executed by a processor, causes the processor to implement the method as described in the present disclosure.

It should be understood that content described in this section is not intended to identify key or important features in the embodiments of the present disclosure, nor is it intended to limit the scope of the present disclosure. Other features of the present disclosure will be easily understood through the following description.

BRIEF DESCRIPTION OF THE DRAWINGS

The accompanying drawings are used to understand the present disclosure better and do not constitute a limitation to the present disclosure, in which:

FIG. 1 schematically shows an exemplary system architecture to which a display method and apparatus according to an embodiment of the present disclosure may be applied;
FIG. 2 schematically shows a flowchart of a display method according to an embodiment of the present disclosure;
FIG. 3A schematically shows an example schematic diagram of a target viewing frustum according to an embodiment of the present disclosure;
FIG. 3B schematically shows a top view of a target viewing frustum according to an embodiment of the present disclosure;

FIG. 4 schematically shows an example schematic diagram of a display process according to an embodiment of the present disclosure;

FIG. 5 schematically shows a block diagram of a display apparatus according to an embodiment of the present disclosure; and

FIG. 6 schematically shows a block diagram of an electronic device suitable for implementing the display method according to an embodiment of the present disclosure.


DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

An embodiment of the present disclosure proposes a display solution: determining eye position information of an object in an image; determining camera position information of naked eye 3D according to the eye position information; creating an eye space according to the camera position information; obtaining, according to object position information of a target object in the eye space, projection position information of the target object on a projection plane based on projection information; and displaying the target object according to the projection position information. The display solution achieves an application of naked eye 3D image display in a screen. In addition, the loading speed of the above solution is relatively fast, which may reduce the failure rate and improve the user experience.

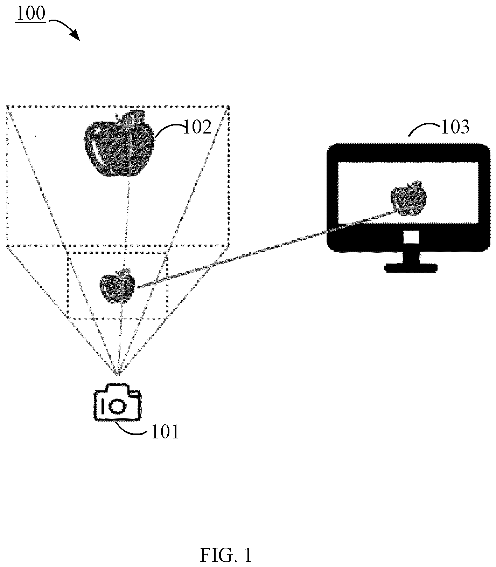

FIG. 1 schematically shows an exemplary system architecture to which a display method and apparatus according to an embodiment of the present disclosure may be applied.

It should be noted that FIG. 1 is only an example of a system architecture to which the embodiments of the present disclosure may be applied, so as to help those skilled in the art to understand the technical content of the present disclosure. However, it does not mean that the embodiments of the present disclosure cannot be used in other devices, systems, environments or scene. For example, in another embodiment, an exemplary system architecture to which the display method and apparatus may be applied may include a terminal device, but the terminal device may implement the display method and apparatus provided by the embodiments of the present disclosure without interacting with a server.

As shown in FIG. 1, a system architecture 100 according to this embodiment may include a naked eye 3D device 101 and a terminal device 103. The naked eye 3D device 101 may include a naked eye 3D camera.

The terminal device 103 may be various electronic devices having a display screen and supporting web browsing, including but not limited to a smart phone, a tablet computer, a laptop computer, a desktop computer, and the like.

The naked eye 3D device 101 may determine eye position information of an object in an image; determine camera position information of naked eye 3D according to the eye position information; create an eye space according to the camera position information; obtain, according to object position information of a target object 102 in the eye space, projection position information of the target object 102 on a projection plane based on projection information; and displaying the target object according to the projection position information. For example, the target object may be displayed on a display screen of the terminal device 103.

It should be noted that the display method provided by the embodiment of the present disclosure may generally be performed by the naked eye 3D device 101. Correspondingly, the display apparatus provided by the embodiment of the present disclosure may further be disposed in the naked eye 3D device 101.

It should be understood that the numbers of the naked eye 3D devices and terminal devices in FIG. 1 are only illustrative. There may be any number of naked eye 3D devices and terminal devices as required in practice.

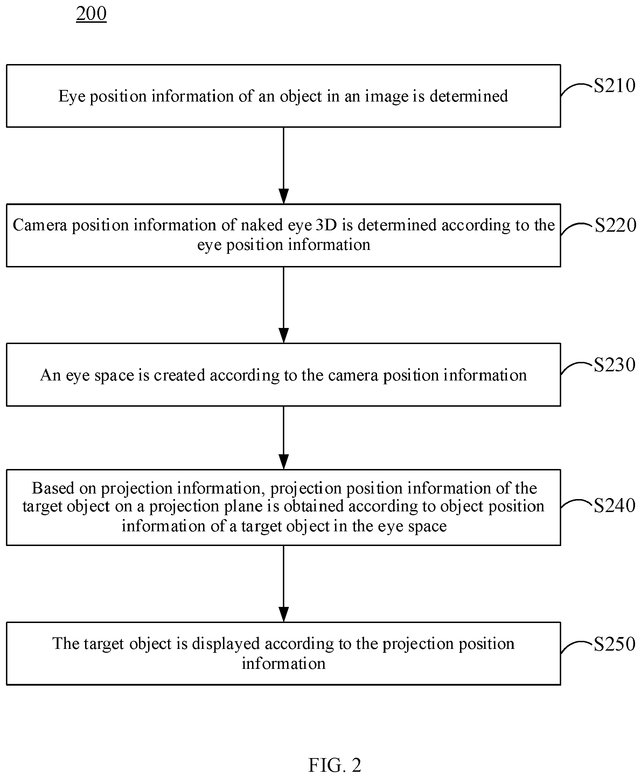

FIG. 2 schematically shows a flowchart of a display method according to an embodiment of the present disclosure.

As shown in FIG. 2, a method 200 includes operations S210 to S250.

In operation S210, eye position information of an object in an image is determined.

In operation S220, camera position information of naked eye 3D is determined according to the eye position information.

In operation S230, an eye space is created according to the camera position information.

In operation S240, based on projection information, projection position information of the target object on a projection plane is obtained according to object position information of a target object in the eye space.

In operation S250, the target object is displayed according to the projection position information.

According to an embodiment of the present disclosure, the image may be acquired by an image acquisition apparatus. The image may be a video frame in a video. A plurality of video frames acquired by the image acquisition apparatus may be acquired. The plurality of video frames is stored in a data structure of a frame sequence queue, so as to process the video frames and determine the eye position information of the object.

According to an embodiment of the present disclosure, the object may include an operator. The operator may include a user. The eye position information may be represented by an eye position coordinate. For example, the eye position coordinate may be (x, y, z). The eye position information may include at least one of: eye position information of a dominant eye and eye position information of an auxiliary eye.

According to an embodiment of the present disclosure, the naked eye 3D may refer to using eyes of the object as a camera. The camera may provide a viewing angle to observe the target object in a 3D scene. The viewing angle may include a position and an angle. The camera position information of the naked eye 3D may refer to the eye position information, that is, the eye position information is determined as the camera position information of the naked eye 3D. The eye space may refer to a 3D space constructed based on the naked eye 3D.

According to an embodiment of the present disclosure, the target object may refer to an object on which a projection operation needs to be performed. For example, the target object may include the user, plant, animal, natural scenery, a household item, a school item, or a work item. The object position information may be represented by an object position coordinate. The projection position information may refer to position information in a projection space.

According to an embodiment of the present disclosure, the projection information may be used to convert the object position information of the target object in the eye space into the projection position information in the projection space. The projection information may include a projection matrix. The projection matrix may be determined according to a pre-determined coordinate range and a side length of a near clipping plane of a target viewing frustum. The target viewing frustum corresponds to the eye space.

According to an embodiment of the present disclosure, the image may be acquired. Object recognition is performed on the image to obtain an object recognition result. In a case where it is determined that the object recognition result includes the object, the eye position information of the object may be determined. Alternatively, target detection may be performed on the image to obtain a target detection result. The eye position information of the object is determined according to the object detection result. The eye position information of the object is determined as the camera position information of the naked eye 3D. The eye space is created based on the camera position information of the naked eye 3D.

According to an embodiment of the present disclosure, the object position information of the target object in the eye space may be converted into the projection position information of the target object on the projection plane by using the projection information. After obtaining the projection position information, the target object may be rendered so as to display the target object on the projection screen. For example, a renderer may be used to render the target object.

According to an embodiment of the present disclosure, eye position information of an object in an image is determined; camera position information of naked eye 3D is determined according to the eye position information; an eye space is created according to the camera position information; according to object position information of a target object in the eye space, projection position information of the target object on a projection plane is obtained based on projection information; and the target object is displayed according to the projection position information. An application of naked eye 3D image display in the screen is achieved. In addition, the loading speed of the above solution is fast, which may reduce the failure rate and improve the user experience.

According to an embodiment of the present disclosure, the eye position information includes eye position information of a dominant eye.

According to an embodiment of the present disclosure, the eyes may include the dominant eye and the auxiliary eye. The dominant eye may refer to an eye that plays the dominant role. The dominant eye may be a left eye or a right eye. The eye position information in "the eye position information is determined as the camera position information of the naked eye 3D" may refer to the eye position information of the dominant eye.

According to an embodiment of the present disclosure, using the eye position information of the dominant eye may reduce the amount of data processing and improve the computing efficiency.

According to an embodiment of the present disclosure, operation S210 may include the following operations.

The image is processed in a case where object recognition is performed on the image and it is determined that the image includes the object, so as to obtain the eye position information of the object.

According to an embodiment of the present disclosure, image data of the image may be input into an object recognition model to obtain the object recognition result. The object recognition result may include one of: the image includes the object and the image does not include the object. The object recognition model may be obtained by training a first pre-determined model by using a first training sample. The first pre-determined model may include a first deep learning model. The first deep learning model may include LeNet, AlexNet, VGG (i.e. Visual Geometry Group Network), Inception Net, ResNet or SqueezeNet.

According to an embodiment of the present disclosure, if it is determined that the object recognition result is that the image includes the object, the image may be processed to obtain the eye position information of the object. For example, the object detection may be performed on the image to obtain the eye position information of the object. Alternatively, the eye position information corresponding to the object may be looked up from a pre-determined database. The pre-determined database may include a plurality of associated relationships. Each associated relationship may represent a relationship between the object and the eye position information of the object.

According to an embodiment of the present disclosure, processing the image to obtain the eye position information of the object may include the following operation.

Object detection is performed on the image to obtain the eye position information of the object.

According to an embodiment of the present disclosure, a region candidate frame corresponding to the eyes may be determined from the image using a sliding window. Then feature extraction is performed on the image corresponding to the region candidate frame to obtain a feature map. Finally, the feature map is classified to obtain the eye position information of the object. Alternatively, the image may be processed using an object detection model to obtain the eye position information of the object.

According to an embodiment of the present disclosure, performing object detection on the image to obtain the eye position information of the object may include the following operation.

The image is processed by using a target detection model, to obtain the eye position information of the object.

According to an embodiment of the present disclosure, the image data of the image may be input into the target detection model to obtain the eye position information of the object. The target detection model may be obtained by training a second pre-determined model by using a second training sample. The second pre-determined model may be a second deep learning model. The second deep learning model may include a candidate frame-based target detection model, a segmentation-based target detection model, or a hybrid-based target detection model.

According to an embodiment of the present disclosure, the projection information may include the projection matrix. The projection matrix is determined according to a pre-determined coordinate range and a side length of a near clipping plane of a target viewing frustum. The target viewing frustum corresponds to the eye space.

According to an embodiment of the present disclosure, the target object may be an object located in the target viewing frustum. The viewing frustum may refer to a frustum range visible to the camera in the scene. The naked eye 3D camera may be disposed at a vertex of the frustum. The viewing frustum may be formed in the following ways. A pyramid is truncated by an upper surface and a lower surface to form a prism, thereby obtaining the viewing frustum. The viewing frustum may include an upper surface, a lower surface, a left surface, a right surface, a front surface, and a rear surface. An inner portion of the viewing frustum is visible, while the rest of the viewing frustum is invisible. The inner portion of the viewing frustum may be called as a clipping space. A surface close to the vertex of the frustum (where the naked eye 3D camera is located) may be called as a near clipping plane. A surface opposite to the near clipping plane and far from the vertex of the frustum is called as a far clipping plane. The near clipping plane may refer to the projection plane.

According to an embodiment of the present disclosure, a side length of the near clipping plane of the target viewing frustum may include a left side length, a right side length, an upper side length and a lower side length. The pre-determined coordinate range may refer to a coordinate range of a coordinate axis in the direction of the naked eye 3D camera, that is, a coordinate range on the Z axis.

According to an embodiment of the present disclosure, a value of each element may be determined according to the pre-determined coordinate range and each side length of the near clipping plane of the target viewing frustum. The projection matrix is obtained according to the value of each element.

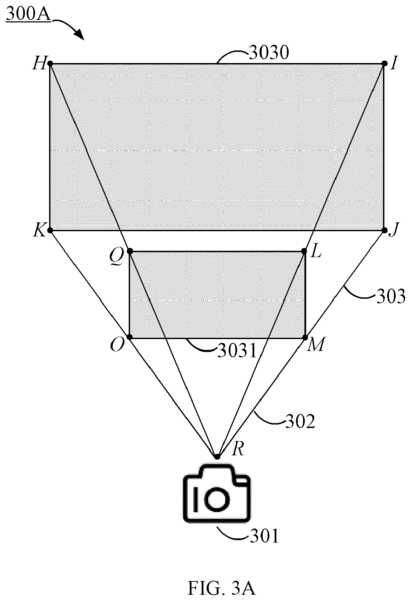

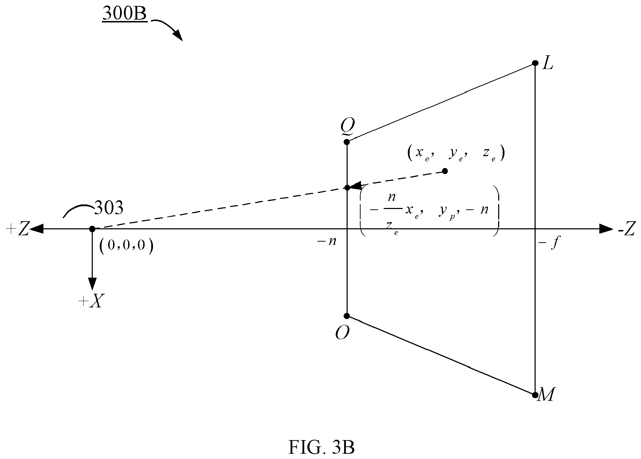

With reference to FIGS. 3A and 3B, a formation process of the projection matrix is further described in combination with specific embodiments.

FIG. 3A schematically shows an example schematic diagram of a target viewing frustum according to an embodiment of the present disclosure.

As shown in FIG. 3A, 300A includes a naked eye 3D camera 301 and a pyramid 302. The pyramid 302 may be a regular pyramid. The pyramid 302 is $R$ - $HIJK$ . The naked eye 3D camera 301 is located at a vertex R of the frustum of the pyramid 302.

The pyramid 302 is truncated by an upper surface 3031 and a lower surface 3030 to obtain a target viewing frustum 303. The upper surface 3031 is a surface $QLMO$ . The lower surface 3030 is a surface $HIJK$ . The upper surface 3031 is the near clipping plane. The lower surface 3030 is the far clipping plane.

FIG. 3B schematically shows a top view of a target viewing frustum according to an embodiment of the present disclosure.

As shown in FIG. 3B, a spatial coordinate system 303 is created according to the eye space in 300B. $(x_e, y_e, z_e)$ represents a pre-determined position coordinate $P_e$ of a pre-determined point P in the eye space. $(x_p, y_p, z_p)$ represents a pre-determined projection position coordinate $P_p$ of a pre-determined projection point of the near clipping plane (i.e. the projection plane). $(x_c, y_c, z_c)$ represents a pre-determined clipping position coordinate $P_c$ of the pre-determined point. $(x_n, y_n, z_n)$ represents a normalized device position coordinate $P_n$ of the pre-determined point. $l$ represents a left side length of the near clipping plane. $r$ represents a right side length of the near clipping plane. $t$ represents an upper side length of the near clipping plane. $b$ represents a lower side length of the near clipping plane. $x_e \in [l, r]$ . $x_n \in [-1,1]$ . $y_e \in [b, t]$ . $y_n \in [-1,1]$. $z_e \in [-n, -f]$. $z_n \in [-1,1]$. The pre-determined coordinate range may be represented by $[-n, -f]$.

$x_e \rightarrow x_p$ may be achieved according to the following equation (1).

$$\frac{x_p}{x_e} = \frac{-n}{z_e} \quad (1)$$

$$x_p = -\frac{nx_e}{z_e}$$ may be obtained according to the equation (1).

$y_e \rightarrow y_p$ may be achieved according to the following equation (2).

$$\frac{y_p}{y_e} = \frac{-n}{z_e} \quad (2)$$

$$y_p = -\frac{ny_e}{z_e}$$ may be obtained according to the equation (2).

$x_p \rightarrow x_n$ may be achieved according to the following equation (3).

$$\frac{x_p - l}{r - l} = \frac{x_n - \left(-1\right)}{1 - \left(-1\right)} \quad (3)$$

An equation set is constructed according to the following equation (4).

$$\begin{cases} \dfrac{x_p - l}{r - l} = \dfrac{x_n - \left(-1\right)}{1 - \left(-1\right)} \\[2mm] \dfrac{y_p - b}{t - b} = \dfrac{y_n - \left(-1\right)}{1 - \left(-1\right)} \\[2mm] x_p = -\dfrac{nx_e}{z_e} \\[2mm] y_p = -\dfrac{ny_e}{z_e} \end{cases} \quad (4)$$

$$\begin{cases} x_n = \left(-\dfrac{x_e}{z_e}\right)\dfrac{2n}{r - l} - \dfrac{r + l}{r - l} \\[2mm] y_n = \left(-\dfrac{y_e}{z_e}\right)\dfrac{2n}{t - b} - \dfrac{t + b}{t - b} \end{cases}$$

may be obtained according to the equation (4).

An expression of a mapping function may be determined according to an equation (5).

$$z_n = \frac{A}{z_e} + B \quad (5)$$

$-n \to -1$ and $-f \to 1$ may be substituted into the equation (5) to obtain an equation (6).

$$\begin{cases} -1 = \dfrac{A}{-n} + B \\ 1 = \dfrac{A}{-f} + B \end{cases} \quad (6)$$

$$\begin{cases} A = \dfrac{2nf}{f-n} \\ B = \dfrac{f+n}{f-n} \end{cases}$$ may be obtained according to the equation (6).

A and B may be substituted into the equation (5) to obtain a mapping function of the z coordinate as the following equation (7).

$$z_n = -\frac{2nf}{f-n}\left(-\frac{1}{z_e}\right) + \frac{f+n}{f-n} \quad (7)$$

$$\begin{cases} x_n = \left(-\dfrac{x_e}{z_e}\right)\dfrac{2n}{r-l} - \dfrac{r+l}{r-l} \\ y_n = \left(-\dfrac{y_e}{z_e}\right)\dfrac{2n}{t-b} - \dfrac{t+b}{t-b} \\ z_n = -\dfrac{2nf}{f-n}\left(-\dfrac{1}{z_e}\right) + \dfrac{f+n}{f-n} \end{cases}$$ may be obtained according to the equations (4) and (7).

The following equation (8) may be obtained by multiplying the above equations by $-z_e$.

$$\begin{cases} -x_n z_e = x_e \dfrac{2n}{r-l} + z_e \dfrac{r+l}{r-l} \\[2mm] -y_n z_e = y_e \dfrac{2n}{t-b} + z_e \dfrac{t+b}{t-b} \\[2mm] -z_n z_e = z_e \left( -\dfrac{f+n}{f-n} \right) - \dfrac{2nf}{f-n} \end{cases} \qquad (8)$$

The above function group is a linear function group of $P_e$. Therefore, a matrix $M_{frustum}$ of 4 × 4 may be used to represent $P_n$, that is, the following equation (9).

$$P_n = M_{frusturn} P_e = \begin{bmatrix} \dfrac{2n}{r-l} & 0 & \dfrac{r+l}{r-l} & 0 \\[2mm] 0 & \dfrac{2n}{t-b} & \dfrac{t+b}{t-b} & 0 \\[2mm] 0 & 0 & -\dfrac{f+n}{f-n} & -\dfrac{2nf}{f-n} \\[2mm] 0 & 0 & -1 & 0 \end{bmatrix} \begin{bmatrix} x_e \\ y_e \\ z_e \\ 1 \end{bmatrix} \qquad (9)$$

An equation (10) may be obtained according to the equation (9).

$$P_c = M_{frusturn} \begin{bmatrix} x_e \\ y_e \\ z_e \\ w_e \end{bmatrix} \qquad (10)$$

According to an embodiment of the present disclosure, $w_c = -z_e$ in the equation (10). $w_c$ represents a pre-determined clipping threshold.

According to an embodiment of the present disclosure, operation S240 may include the following operations.

The projection matrix is multiplied with the object position information of the target object in the eye space, to obtain clipping position information of the target object. The projection position information of the target object on the projection plane is obtained according to the clipping position information of the target object.

According to an embodiment of the present disclosure, the object position information may be the object position coordinate. The clipping position information may be the clipping position coordinate. The projection position information may be the projection position coordinate.

According to an embodiment of the present disclosure, the projection matrix may be $M_{frustum}$ in the equation (9). After multiplying the projection matrix and the object position coordinate to obtain the clipping position information of the target object, the equation (10) may be used to divide the clipping position coordinate by a pre-determined clipping position coordinate component, to obtain the normalized device position coordinate. That is, the normalized device position coordinate may be determined by the equation (9). The normalized device position coordinate may be determined as the projection position coordinate.

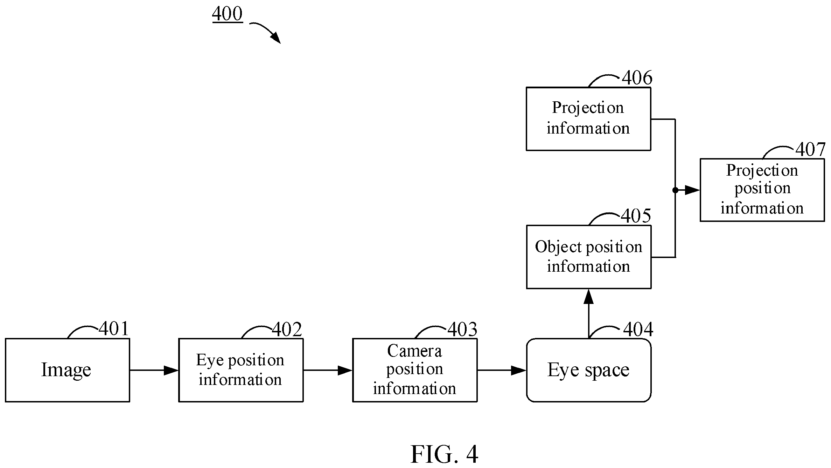

The display method according to the embodiment of the present disclosure will be further described below with reference to FIG. 4 in conjunction with specific embodiments.

FIG. 4 schematically shows an example schematic diagram of a display process according to an embodiment of the present disclosure.

As shown in FIG. 4, an image 401 may be acquired in 400. When the object recognition is performed on the image 401 and it is determined that the image 401 includes the object, the object detection is performed on the image 401 to obtain eye position information 402 of the object in the image 401.

Camera position information 403 of the naked eye 3D is determined according to the eye position information 402. An eye space 404 is then created according to the camera position information 403. Projection position information 407 of the target object on the projection plane is obtained, based on projection information 406, according to the object position information 405 of the target object in the eye space 404. Finally, the target object is displayed according to the projection position information 407.

The above are only exemplary embodiments, but not limited thereto. Other display methods known in the art may further be included, as long as the application of naked eye 3D image display in the screen may be achieved.

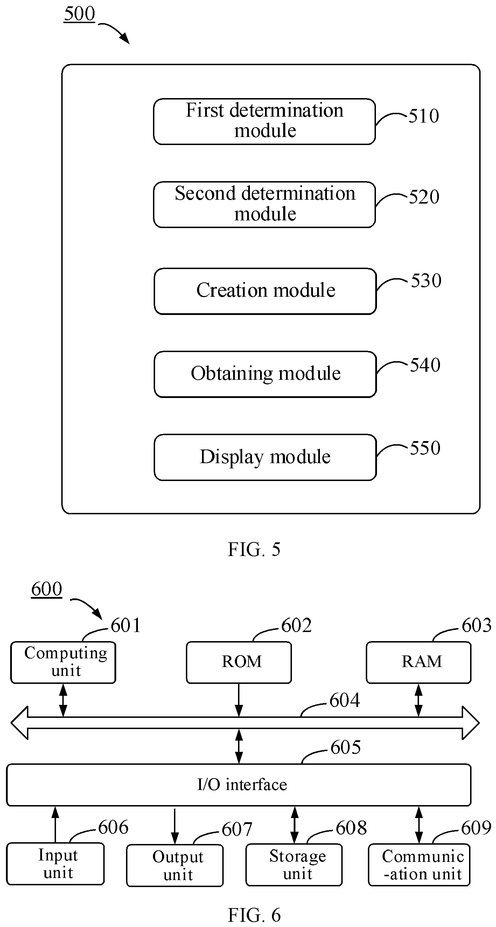

FIG. 5 schematically shows a block diagram of a display apparatus according to an embodiment of the present disclosure.

As shown in FIG. 5, a display apparatus 500 may include a first determination module 510, a second determination module 520, a creation module 530, an obtaining module 540 and a display module 550.

The first determination module 510 is used to determine eye position information of an object in an image.

The second determination module 520 is used to determine camera position information of naked eye 3D according to the eye position information.

The creation module 530 is used to create an eye space according to the camera position information.

The obtaining module 540 is used to obtain, according to object position information of a target object in the eye space, projection position information of the target object on a projection plane based on projection information.

The display module 550 is used to display the target object according to the projection position information.

According to an embodiment of the present disclosure, the first determination module 510 may include a first obtaining sub-module.

The first obtaining sub-module is used to process the image in a case where object recognition is performed on the image and it is determined that the image includes the object, to obtain the eye position information of the object.

According to an embodiment of the present disclosure, the first obtaining sub-module may include an obtaining unit.

The obtaining unit is used to perform object detection on the image to obtain the eye position information of the object.

According to an embodiment of the present disclosure, the obtaining unit may include an obtaining sub-unit.

The obtaining sub-unit is used to process the image by using a target detection model, to obtain the eye position information of the object.

According to an embodiment of the present disclosure, the projection information includes the projection matrix.

According to an embodiment of the present disclosure, the obtaining module may include a second obtaining sub-module and a third obtaining sub-module.

The second obtaining sub-module is used to multiply the projection matrix and the object position information of the target object in the eye space, to obtain clipping position information of the target object.

The third obtaining sub-module is used to obtain, according to the clipping position information of the target object, the projection position information of the target object on the projection plane.

According to an embodiment of the present disclosure, the eye position information includes eye position information of a dominant eye.

According to an embodiment of the present disclosure, the projection matrix is determined according to a predetermined coordinate range and a side length of a near clipping plane of a target viewing frustum, and the target viewing frustum corresponds to the eye space.

According to an embodiment of the present disclosure, the present disclosure further provides an electronic device, a readable storage medium, and a computer program product.

According to an embodiment of the present disclosure, the electronic device includes at least one processor; and a memory communicatively connected to the at least one processor, wherein the memory stores instructions executable by the at least one processor, and the instructions, when executed by the at least one processor, cause the at least one processor to implement the above-mentioned method.

According to an embodiment of the present disclosure, a non-transitory computer-readable storage medium having computer instructions stored thereon is provided, wherein the computer instructions are configured to cause a computer to implement the above-mentioned method.

According to an embodiment of the present disclosure, a computer program product containing a computer program is provided, wherein the computer program, when executed by a processor, causes the processor to implement the above-mentioned method.

FIG. 6 shows a schematic block diagram of an exemplary electronic device 600 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the device 600 may include a computing unit 601, which may perform various appropriate actions and processing based on a computer program stored in a read-only memory (ROM) 602 or a computer program loaded from a storage unit 608 into a random access memory (RAM) 603. Various programs and data required for the operation of the device 600 may be stored in the RAM 603. The computing unit 601, the ROM 602 and the RAM 603 are connected to each other through a bus 604. An input/output (I/O) interface 605 is further connected to the bus 604.

Various components in the device 600, including an input unit 606 such as a keyboard, a mouse, etc., an output unit 607 such as various types of displays, speakers, etc., a storage unit 608 such as a magnetic disk, an optical disk, etc., and a communication unit 609 such as a network card, a modem, a wireless communication transceiver, etc., are connected to the I/O interface 605. The communication unit 609 allows the device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 601 may perform the various methods and processes described above, such as the display method. For example, in some embodiments, the display method may be implemented as a computer software program that is tangibly contained on a machine-readable medium, such as a storage unit 608. In some embodiments, part or all of a computer program may be loaded and/or installed on the device 600 via the ROM 602 and/or the communication unit 609. When the computer program is loaded into the RAM 603 and executed by the computing unit 601, one or more steps of the display method described above may be performed. Alternatively, in other embodiments, the computing unit 601 may be configured to perform the display method in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A display method (200), comprising:

    determining (S210) eye position information of an object in an image;
    determining (S220) camera position information of naked eye 3D according to the eye position information;
    creating (S230) an eye space according to the camera position information;
    obtaining (S240), according to object position information of a target object in the eye space, projection position information of the target object on a projection plane based on projection information; and
    displaying (S250) the target object according to the projection position information.

2. The method according to claim 1, wherein determining the eye position information of the object in the image comprises:
    processing the image in a case where object recognition is performed on the image and it is determined that the image comprises the object, to obtain the eye position information of the object.

3. The method according to claim 2, wherein processing the image to obtain the eye position information of the object comprises:
    performing object detection on the image to obtain the eye position information of the object.

4. The method according to claim 3, wherein performing object detection on the image to obtain the eye position information of the object comprises:
    processing the image by using a target detection model, to obtain the eye position information of the object.

5. The method according to any one of claims 1 to 4, wherein the projection information comprises a projection matrix, and obtaining, according to the object position information of the target object in the eye space, the projection position information of the target object on the projection plane based on the projection information comprises:

    multiplying the projection matrix and the object position information of the target object in the eye space, to obtain clipping position information of the target object; and
    obtaining, according to the clipping position information of the target object, the projection position information of the target object on the projection plane.

6. The method according to any one of claims 1 to 5, wherein the eye position information comprises eye position information of a dominant eye.

7. The method according to claim 5 or 6, wherein the projection matrix is determined according to a pre-determined coordinate range and a side length of a near clipping plane of a target viewing frustum, and the target viewing frustum corresponds to the eye space.

8. A display apparatus (500), comprising:

   a first determination module (510) configured to determine eye position information of an object in an image;
   a second determination module (520) configured to determine camera position information of naked eye 3D according to the eye position information;
   a creation module (530) configured to create an eye space according to the camera position information;
   an obtaining module (540) configured to obtain, according to object position information of a target object in the eye space, projection position information of the target object on a projection plane based on projection information; and
   a display module (550) configured to display the target object according to the projection position information.

9. The apparatus according to claim 8, wherein the first determination module comprises:
   a first obtaining sub-module configured to process the image in a case where object recognition is performed on the image and it is determined that the image comprises the object, to obtain the eye position information of the object.

10. The apparatus according to claim 9, wherein the first obtaining sub-module comprises:
    an obtaining unit configured to perform object detection on the image to obtain the eye position information of the object.

11. The apparatus according to any one of claims 8 to 10, wherein the projection information comprises a projection matrix, and the obtaining module comprises:

    a second obtaining sub-module configured to multiply the projection matrix and the object position information of the target object in the eye space, to obtain clipping position information of the target object; and
    a third obtaining sub-module configured to obtain, according to the clipping position information of the target object, the projection position information of the target object on the projection plane.

12. The apparatus according to claim 11, wherein the projection matrix is determined according to a pre-determined coordinate range and a side length of a near clipping plane of a target viewing frustum, and the target viewing frustum corresponds to the eye space.

13. An electronic device (600), comprising:

    at least one processor (601); and
    a memory (602, 603) communicatively connected to the at least one processor, wherein the memory stores instructions executable by the at least one processor, and the instructions, when executed by the at least one processor, cause the at least one processor to implement the method of any one of the claims 1 to 7.

14. A non-transitory computer-readable storage medium having computer instructions stored thereon, wherein the computer instructions are configured to cause a computer to implement the method of any one of claims 1 to 7.

15. A computer program product containing a computer program, wherein the computer program, when executed by a processor, causes the processor to implement the method of any one of claims 1 to 7.

100

102

103

101

FIG. 1

200

| | |
|---|---|
| Eye position information of an object in an image is determined | S210 |

| | |
|---|---|
| Camera position information of naked eye 3D is determined according to the eye position information | S220 |

| | |
|---|---|
| An eye space is created according to the camera position information | S230 |

| | |
|---|---|
| Based on projection information, projection position information of the target object on a projection plane is obtained according to object position information of a target object in the eye space | S240 |

| | |
|---|---|
| The target object is displayed according to the projection position information | S250 |

FIG. 2

FIG. 3A

FIG. 3B

FIG. 4

<u>500</u>

First determination module —510

Second determination module —520

Creation module —530

Obtaining module —540

Display module —550

FIG. 5

<u>600</u>

—601

Computing unit

—602

ROM

—603

RAM

—604

—605

I/O interface

—606

Input unit

—607

Output unit

—608

Storage unit

—609

Communic -ation unit

FIG. 6

Europäisches
Patentamt

European
Patent Office

Office européen
des brevets

# EUROPEAN SEARCH REPORT

**Application Number**

EP 22 21 6743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 253 845 A (ZONGSHEN VISION TECH NANJING CO LTD) 13 August 2021 (2021-08-13) | 1,6,8, 13-15 | INV. G06T15/00 G06F3/01 |
| Y | * Subject of Invention * * paragraph [0001] * * page 2, line 8 * * page 9, line 15 * * page 10, line 4 * * page 12, lines 15-20 * ----- | 2-5,7, 9-12 | G06T7/70 G06T15/20 H04N13/383 H04N13/106 H04N13/307 G06N3/08 H04N13/111 |
| Y | US 2021/185301 A1 (WU SUNG-YANG [TW] ET AL) 17 June 2021 (2021-06-17) * abstract * ----- | 2-4,9,10 | H04N13/279 |
| Y | FERNANDO ROMAN ET AL: "Improving Gameplay in First Person 3-D Games using Multiple Displays", COMPUTERS IN ENTERTAINMENT (CIE), ACM, 2 PENN PLAZA, SUITE 701 NEW YORK NY 10121-0701 USA, vol. 12, no. 2, 13 February 2015 (2015-02-13), pages 1-22, XP058065892, DOI: 10.1145/2701657.2701653 * abstract * * figure 9 * * figure 4 * ----- | 5,7,11, 12 | |
| Y | CN 112 668 460 A (BEIJING BAIDU NETCOM SCI & TECH CO LTD) 16 April 2021 (2021-04-16) * the whole document * & EP 3 961 579 A2 (APOLLO INTELLIGENT CONNECTIVITY BEIJING TECH CO LTD [CN]) 2 March 2022 (2022-03-02) * abstract * * paragraph [0037] * ----- | 4 | |

| | | | TECHNICAL FIELDS SEARCHED (IPC) |
|---|---|---|---|
| | | | G06T G06F H04N G06N |

-/--

The present search report has been drawn up for all claims

| Place of search | Date of completion of the search | Examiner |
|---|---|---|
| Munich | 9 March 2023 | Lauri, Lauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 22 21 6743**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 704 879 B1 (CHENG HOWARD [US] ET AL) 22 April 2014 (2014-04-22) * the whole document * | 1-15 | |
| A | US 2019/124313 A1 (LI TUOTUO [US] ET AL) 25 April 2019 (2019-04-25) * the whole document * | 1-15 | |

**TECHNICAL FIELDS SEARCHED (IPC)**

The present search report has been drawn up for all claims

| Place of search | Date of completion of the search | Examiner |
|---|---|---|
| Munich | 9 March 2023 | Lauri, Lauro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 6743

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2023

| Patent document cited in search report | | Publication date | Patent family member(s) | | Publication date |
|---|---|---|---|---|---|
| CN 113253845 | A | 13-08-2021 | NONE | | |
| US 2021185301 | A1 | 17-06-2021 | NONE | | |
| CN 112668460 | A | 16-04-2021 | CN 112668460 A | | 16-04-2021 |
| | | | EP 3961579 A2 | | 02-03-2022 |
| | | | JP 2022043216 A | | 15-03-2022 |
| | | | KR 20220004607 A | | 11-01-2022 |
| | | | US 2022114759 A1 | | 14-04-2022 |
| US 8704879 | B1 | 22-04-2014 | US 8704879 B1 | | 22-04-2014 |
| | | | US 2014184588 A1 | | 03-07-2014 |
| | | | US 2015309571 A1 | | 29-10-2015 |
| | | | US 2019025913 A1 | | 24-01-2019 |
| US 2019124313 | A1 | 25-04-2019 | CN 109683335 A | | 26-04-2019 |
| | | | DE 102018123048 A1 | | 25-04-2019 |
| | | | KR 20190043999 A | | 29-04-2019 |
| | | | KR 20220155970 A | | 24-11-2022 |
| | | | US 2019124313 A1 | | 25-04-2019 |
| | | | US 2020204781 A1 | | 25-06-2020 |
| | | | US 2021152804 A1 | | 20-05-2021 |
| | | | US 2023019187 A1 | | 19-01-2023 |

EPO FORM P0459

For more details about this annex : see Official Journal of the European Patent Office, No. 12/82